# EUROPEAN PATENT APPLICATION

(11) **EP 4 610 927 A1**
(43) Date of publication of application: **03.09.2025**
(21) Application number: 23882026.0
(22) Date of filing: 17.03.2023
(51) Int. Cl.: G06T 7/20, H04N 5/33, H04N 5/30

(54) **PIXEL FOR DVS VISION SENSORS WITH ONE OR MORE PHOTODIODES OPERATING IN A PHOTOVOLTAIC REGIME**

(30) Priority: 27.10.2022 ES 202230929
(71) Applicant: Universidad de Sevilla, 41013 Sevilla (ES)
(72) Inventor: FERNÁNDEZ PERAMO, Pablo, 41092 Sevilla (ES); LEÑERO BARDALLO, Juan Antonio, 41092 Sevilla (ES); RODRÍGUEZ VÁZQUEZ, Ángel, 41092 Sevilla (ES)
(74) Representative: Pons IP
(86) International application number: PCT/ES2023/070168
(87) International publication number: WO 2024/089302

(57) **Abstract**

The invention discloses a new DVS (Dynamic Vision Sensor) type pixel architecture in which output pulses are generated when the pixel detects temporal variations of illumination. The pixel uses one or more photodiodes operating in the photovoltaic region as a photoreceptor. The anode of these photodiodes can be connected directly to a source follower or buffer. The voltage at the anode of the photodiodes logarithmically depends on the photocurrent of the photodiode, and the use of a logarithmic photoreceptor is not necessary, which reduces the dimensions of the pixel with respect to existing architectures.

## Description

### OBJECT OF THE INVENTION

The proposed invention falls within the microelectronic design of DVS (Dynamic Vision Sensor) type vision sensors. A new pixel architecture is proposed for implementing DVS-type vision sensors in which a photodiode operating in photovoltaic mode acts as both a transducer and a photoreceptor, performing a direct logarithmic conversion between the photocurrent it generates and the voltage between its terminals.

### BACKGROUND OF THE INVENTION

The DVS (Dynamic Vision Sensor) type vision sensors consist of detection units (pixels) operating autonomously and asynchronously. They are characterised by the fact that their pixels react to temporal changes of illumination in the visual scene, generating pulses asynchronously when they detect illumination variations (temporal contrast). These asynchronous pulses trigger events consisting of the transmission of the coordinates of the specific pixel that has detected a change of illumination via a bus shared by all the pixels of the sensor, using the AER (Address Event Representation) asynchronous communication protocol. DVS sensors incorporate peripheral modules that channel the information transmitted by the pixels autonomously to the outside. Since pixels are fully autonomous and can detect temporal contrast simultaneously, it can happen that several pixels try to transmit their coordinates at the same time through the shared bus, generating events simultaneously. In such cases, a collision is said to have occurred. The peripheral readout circuitry is responsible for arbitrating collisions. It does this by giving priority to the row or column of one of the pixels that has generated an event, while keeping the rest on standby. As soon as the coordinates of the pixel that has been attended are transmitted and read by an external peripheral, said pixel is reset, being released and available to detect temporal changes in illumination again.

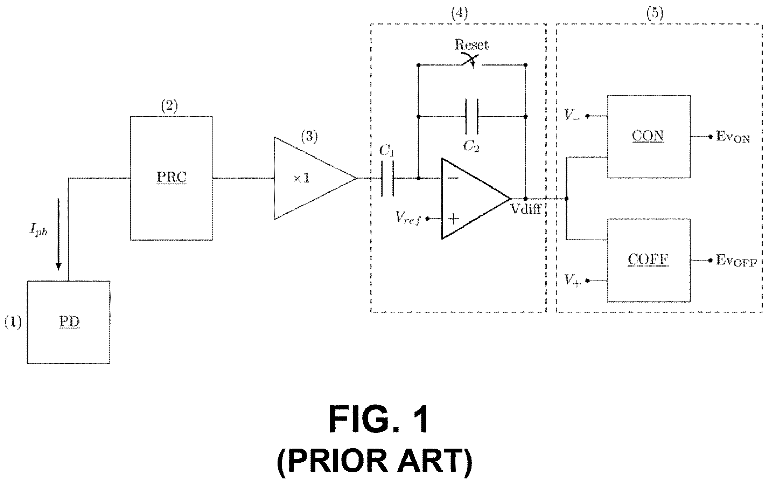

Analysing the conventional architecture of the pixels that make up DVS vision sensors illustrated in Figure 1, it consists mainly of five modules or stages: Firstly, there is a Photodiode (PD) operating in the inverse region (1). Secondly, there is a Photo Receptor Circuit (PRC) (2) that performs a logarithmic conversion between the photocurrent at its input, *Iₚₕ*, and its output voltage. Thirdly, there is a Source Follower (SF) (3), to decouple the output voltage of the photoreceptor circuit with the next stage. Fourthly, there is a Differentiating Amplifier (4) which only amplifies the time variations of the voltage generated by the photoreceptor stage. If the illumination does not vary temporarily, the differentiating amplifier keeps its output voltage level constant at a reference level of V_{ref} value. Finally, there are two comparators (5), CON and COFF, which generate pulses when the output of the differentiating amplifier varies positively or negatively, respectively, above or below two voltage thresholds, *V*₋ and *V*₊, which are set independently in each comparator. These pulses activate the peripheral readout modules of the sensor which are responsible for transmitting to the outside the coordinates of the pixel that has detected temporal contrast. Once the address of the pixel has been transmitted, the pixel is reset, setting the output voltage of the differentiating amplifier to a reference voltage level, *V_{ref}*, comprised between *V*₋ and *V₊.* If a temporal variation of illumination is detected again afterwards, the described operation is repeated.

One of the limitations of DVS vision sensors, when compared to conventional vision systems with Active Pixel Sensor (APS) frame-based cameras, is their large pixel dimensions, which consist of many more transistors than APS pixels. Consequently, the spatial resolution of DVS vision sensors is lower than that of conventional image sensors. A constant goal of the industry is the search for ever-smaller DVS pixel architectures to mitigate this limitation. The DVS sensor architecture of the present invention is a step in this direction to reduce the dimensions of the pixel.

References of previously reported DVS sensors are provided below for a comparative analysis with respect to the state of the art:
- Patrick Lichtsteiner, Christoph Posch, Tobi Delbruck, "A 128 × 128 120 dB 15 µs Latency Asynchronous Temporal Contrast Vision", IEEE Journal of Solid-State Circuits, September 2008, vol. 43, No. 2, p: 566-576.
- *Dynamic vision sensor architecture.* US patent US10567679B2.
- *Dynamic vision sensors configured to calibrate event signals using optical black region and methods of operating the* same. US patent US2020312899A1.
- *Dynamic vision sensor system.* US Patent US2021185258A1.

Examination of the documents shows that they explicitly mention the need to use a Photo Receptor Circuit (PRC) (2) which is responsible for performing a logarithmic conversion of the photocurrent of a photodiode to a voltage value which is processed by the later stages. In the proposed new architecture, this photoreceptor stage is dispensed with.

In all the references, a photodiode (or other equivalent type of photosensor) appears as the element that measures light intensity (1). The photodiode current, *Iₚₕ*, is such that it consumes power at the pixel (enters in block (1)), as illustrated by an arrow indicating the direction of the current in Figure 1 and in the cited references. In the pixel architecture proposed in the present invention, said photodiode is replaced by a photodiode operating in the photovoltaic region. The current it generates is such that it does not consume energy, it brings it to the pixel (out of the photodiode to the next stage of the pixel). Therefore, the energy consumption of the pixel will be lower with the proposed architecture.

### DESCRIPTION OF THE INVENTION

A pixel for DVS vision sensors is proposed. Specifically, a pixel is proposed in which a photodiode (or several in parallel) is used operating in a photovoltaic mode (that is, it does not consume energy but provides energy by generating a current that flows from the anode of the photodiode to the next stage of the pixel). The magnitude of the current generated by the photodiode (photocurrent) depends on the illumination to which the photodiode(s) is exposed. This current flows from the anode of the photodiode to the next module of the pixel. The voltage that is generated between the anode and cathode of the photodiode is called Open Circuit Voltage (*V_{oc}*). This open circuit voltage depends logarithmically on the photocurrent generated by the photodiode, *lₚₕ.* Therefore, the photodiode in photovoltaic mode performs by itself a logarithmic conversion between the current and the voltage of its terminals (acting as a photoreceptor stage), it not being necessary, therefore, to incorporate a photoreceptor block (PRC) connected to the photodiode, to perform such an operation. This means a reduction in area and energy consumption with respect to existing architectures. Said contribution is not obvious because it requires in-depth knowledge of the diode operating in photovoltaic mode and its applicability as a logarithmic photoreceptor in this specific field of application. Note that all reported DVS vision sensors use diodes operating in the inverse region of operation, which imposes the use of a different and more complex architecture for the photoreceptor stage than the one proposed.

In one embodiment, the voltage at the anode of the photodiode is connected to a source follower or buffer that decouples the output voltage of the photodiode from the differentiating amplifier, which is the third stage. Finally, voltage comparators are used to set the positive and negative thresholds, respectively, for which temporal voltage variations are detected. At the architecture level, the proposed pixel architecture is compatible with the traditional asynchronous readout channels, which make use of the AER communication protocol to transmit the data generated by the pixels; the differentiating amplifier; and the voltage comparators are analogous to those present in the original pixel architecture.

Optionally, a photodiode (or several in parallel) can be selectively connected via breakers, which act as a switch, to a global node shared by all the pixels of the sensor and which is connected to a capacitor or similar storage element that accumulates photovoltaic energy. While the anodes of the photodiodes of the pixels are connected to this node, energy is stored in the storage element. This stored energy can be used at a subsequent phase of operation to power the rest (or part) of the modules of the pixel, either directly or after a DC-DC conversion. When the anode of the photodiode is not connected to the global node, the pixels operate autonomously, generating output pulses when they detect changes in illumination. The rest of the elements of the pixel, source follower, differentiating amplifier and voltage comparators can be identical to those of the embodiment described above and to those of the original architecture.

Pixels are the light detection units in a vision sensor. Therefore, a DVS-type vision sensor comprising a cluster of pixels as proposed above is also proposed.

In one possible embodiment, a DVS-type vision sensor with pixels with the proposed architecture has the following elements: a set of pixels (for example, a pixel array) with one of the architectures described above; a block that manages the peripheral communication of the pixels (for example, via the AER communication protocol); a block that encodes the direction of the active rows or columns; and an arbitrator block that arbitrates the requests of the rows or columns, in case of collision.

### DESCRIPTION OF THE DRAWINGS

In order to complement the description and with the object of helping to better understand the features of the invention, in accordance with a preferred practical exemplary embodiment thereof, said description is accompanied, as an integral part thereof, by a set of figures in which, in an illustrative and non-limiting manner, the following has been represented:
Figure 1 shows the conventional architecture of a DVS pixel with a photodiode (PD) or similar element consuming power, as indicated by the direction of its photocurrent, and a logarithmic photoreceptor (PRC).

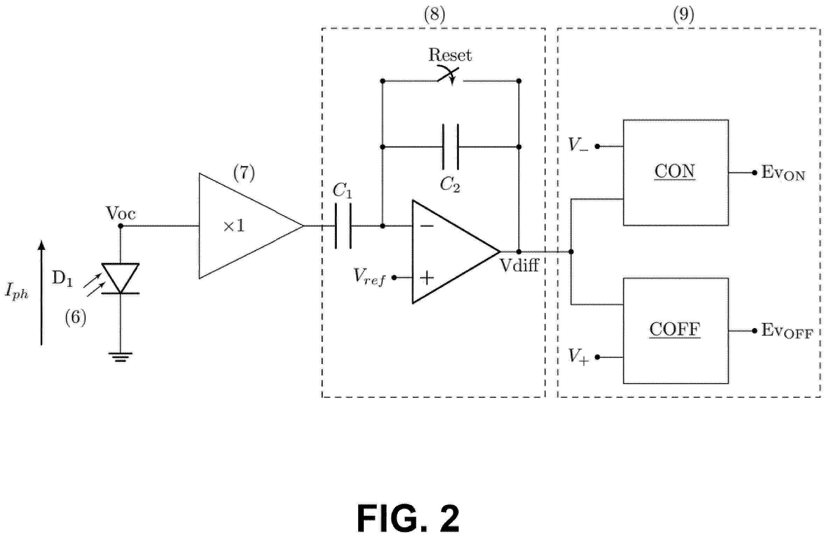

Figure 2 shows the proposed DVS pixel architecture according to one embodiment of the invention. A photodiode operating in the photovoltaic region is used. It generates a current that flows out of its anode and supplies energy to the pixel. The logarithmic photoreceptor is dispensed with and the anode of the photodiode is connected directly to the next stage (source follower).

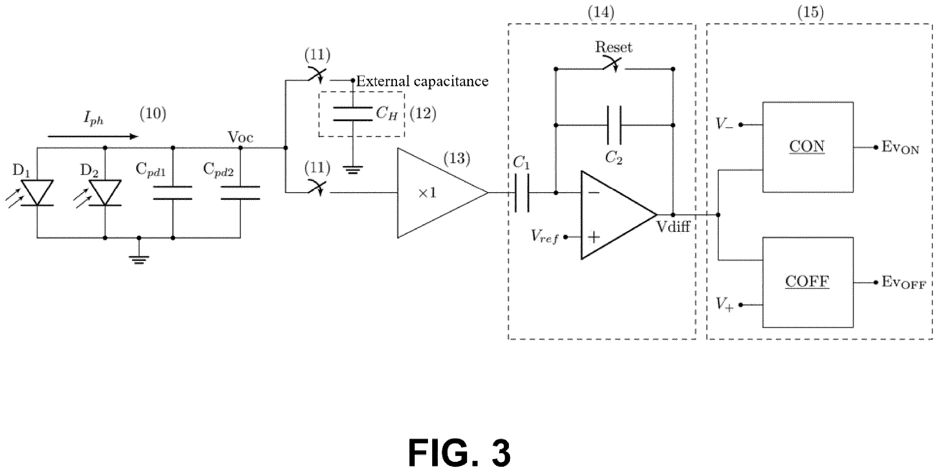

Figure 3 shows a possible preferred exemplary embodiment. There may be one or more than one photodiode operating in parallel. Their anodes are connected to each other via breakers to two possible points: a) A global node shared by all the pixels with a capacitor where energy is stored. b) The next stage inside each pixel, the source follower.

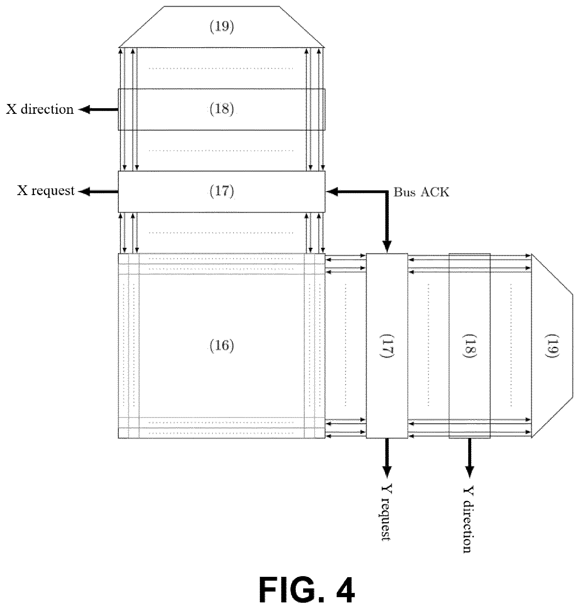

Figure 4: Block diagram of a preferred embodiment of a DVS-type vision sensor with pixels with the proposed architecture. The sensor elements are: a pixel array with the architecture described in Figure 3, for example; a block that manages the peripheral communication of the pixels using the AER communication protocol; a block that encodes the direction of the active rows or columns; and a block that arbitrates the requests of the rows or columns, in case of collision.

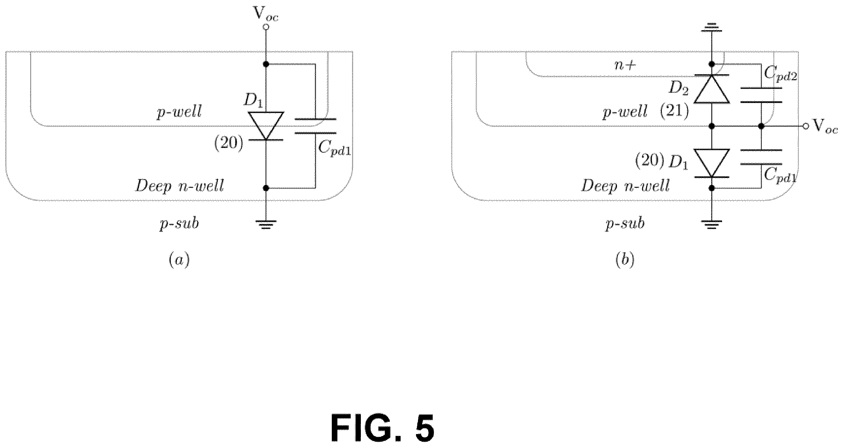

Figure 5: Examples of possible implementations of photodiodes operating in photovoltaicmode in standard CMOS technology. Figure 5 (a): Single photodiode, via the PN *p-well*/Deep n-well junction. Figure 5 (b): Dual photodiode, via the *p-well*/*Deep n-well* and *n-diff*/*p-well* junctions shown connected in parallel through the anodes of the resulting photodiodes. The parasitic capacitances associated with each photodiode, C_{pd1} and C_{pd2}, are shown.

### PREFERRED EMBODIMENT OF THE INVENTION

In the present invention, a pixel circuit is proposed for a DVS-type sensor, in which a photodiode (1) connected to a photoreceptor circuit (2) is replaced by one or more photodiodes operating in photovoltaic region (mode). In this way, a considerable reduction in the dimensions of the pixel is achieved, as the photoreceptor circuit (2) is dispensed with. In addition, there are some additional advantages. Photodiodes in the photovoltaic region operate as solar cells that generate energy (current) instead of consuming it. They can therefore reduce the energy consumption of the DVS sensor and can also lead to self-powered DVS-type sensors.

Figure 2 shows a possible embodiment of the proposed pixel circuit architecture. A photodiode (6) is used operating in photovoltaic mode (generating energy instead of consuming it) as the element generating a photocurrent, *Iₚₕ*, which flows in the direction indicated by the arrow in Figure 2 (in the case of Figure 2, only one photodiode is shown but more than one may be connected in parallel). This current flows from the photodiode (more specifically from its anode) to the next module of the pixel (or in other words, to the next stage of the circuit of the pixel). In the case of Figure 2, this next stage is a source follower or buffer (7), as illustrated in Figure 2. That is, as shown in the figure, the anode of the photodiode is directly connected to a source follower (although, in other cases such as that of Figure 3, it may be connected to the source follower via a breaker) and its cathode is connected to a fixed reference voltage. The source follower (7) is connected to the differentiating amplifier (8); that is, the source follower (7) has its input connected to the photodiode and its output to the differentiating amplifier (8). This differentiating amplifier (8) amplifies the temporal voltage variations at its input, in this case, it therefore amplifies the temporal voltage variations at the output of the source follower or buffer.

Finally, voltage comparators (9), CON and COFF, are used to establish the positive and negative thresholds (V₋ and V₊), respectively, for which temporal voltage variations are detected, being activated (switched) when the threshold voltage is reached at the input of one of them. One of said voltage comparators (COFF) compares the output of the differentiating amplifier (8) to a positive threshold *V*₊ and the other voltage comparator (CON) compares the output of the differentiating amplifier (8) to a negative threshold (*V*₋).

A preferred embodiment of the invention is shown in Figures 3 and 4. A possible implementation of the pixels is shown in Figure 3. One photodiode or several in parallel (two photodiodes in the particular preferred example in Figure 3 but can be any number of diodes) are used operating in photovoltaic mode (10), together with their parasitic capacitances, *C_{pd1}* and *C_{pd2}*. In this embodiment, the anode of the photodiode (or the anodes of these photodiodes connected to each other, if there are several as in Figure 3) is connected to one or more breakers (11) which act as a switch and allow the anodes of the one or more photodiodes to be selectively connected to two different nodes. One of the nodes can be shared by all the pixels of the sensor. In it, there is an external capacitor (12) that acts as a battery and allows energy to be stored to power the modules (or part of them) that make up the pixel at a later stage of operation. The other node is the input to a source follower (13) which copies the open circuit voltage at the anode of the photodiode.

After the source follower (13), there is a differentiating amplifier (14) which amplifies the temporal variations of the open circuit voltage generated at the anode of the photodiode. In the event that these voltage variations exceed a positive or negative threshold (*V*₊ and *V*₋), a pulse is generated by two voltage comparators (15), COFF and CON, respectively. These pulses initiate a process of transmitting the coordinates of the pixel that has generated events through a bus shared by all pixels of the sensor and by using the AER communication protocol. Finally, when the coordinates of the pixel have been transmitted, the differentiating amplifier (14) is reset, setting its output to a voltage value comprised between the two voltage thresholds of the two comparators, *V*₋ and *V*₊. The transmission cycle of the pixel information is repeated each time there is a temporal variation of illumination sufficient to activate one of the two comparators. It should be noted that the source follower (13), differentiating amplifier (14) and voltage comparator (15) elements may be the same as those described for Figures 1 and 2.

Figure 4 shows a block diagram of a preferred embodiment of a DVS-type vision sensor with pixels with the proposed architecture. The elements of the sensor are: an array of pixels (16), each of them, for example, with the circuit proposed in Figure 2 or preferably with the one proposed in Figure 3; a communication block or module that manages the peripheral communication of the pixels (17), for example, using the AER communication protocol, with the rest of the peripheral modules of the sensor; an encoder block or module that encodes the direction of the active rows or columns (18); and an arbiter block or module (19) that arbitrates the requests of the rows or columns, in case of collision.

In other words, the communication block or module (17) generates the necessary control signals to establish communication between the rows and columns of the pixel array with the rest of the peripheral blocks/modules, using the AER communication protocol. The encoder peripheral block or module (18) encodes the coordinates of the pixels of the rows or columns being attended. And the arbiter block or module (19) arbitrates the requests of the rows and columns, giving (in case of collision) priority to one of the pixels that are simultaneously active, if any.

The pixels generate requests (events) per row (or column) each time the output of one of their comparators is activated (generates a pulse); that pixel is then said to be active. These requests are shared by all the pixels in each row and column. First, they are sent to a communication block (peripheral), which indicates whether there are active rows or columns (17). The arbiter block (19) receives requests from all the rows or columns and only assents to one of them. The encoder block (18) encodes the coordinates, *X* or *Y,* of the rows or columns that have been attended by the arbiter block. The process of reading the events generated by the pixels is carried out in two phases: in one phase, first a row (or column) arbitration is performed, and then a column (or row) arbitration is performed. Once the coordinates *X* and *Y* are read by an external peripheral, it sends a global signal (*Bus ACK*) to the sensor, so that the read pixel is reset.

Figure 5 shows two possible implementations of photodiodes operating in photovoltaic mode in standard CMOS technology (this is only an example, and other possible implementations of photodiodes operating in the photovoltaic regime are possible). A single photodiode can be implemented (Figure 5 (a)), via the PN *p-well*/*Deep n-well* junctions (20) or, for example, two in parallel (Figure 5(b)), via the *p-well*/*Deep n-well* (20) and *n-diff (n+)*/*p-well* (21) junctions shown. With the two photodiodes in parallel, a higher sensitivity to light and to all colours in the visible and near-infrared spectrum is achieved.

## Claims

1. A pixel of a DVS (dynamic vision sensor) type vision sensor, wherein the pixel comprises:
- one or more photodiodes (6, 10) comprising an anode and a cathode connected to a fixed reference voltage, wherein the one or more photodiodes (6, 10) are connected in parallel and operating in photovoltaic mode;
- a source follower (7, 13) to which the one or more photodiodes (6, 10) are connected directly or via a first breaker through the anodes;
- a differentiating amplifier (8, 14), to which the source follower (7, 13) is connected at its output;
- two voltage comparators (9, 15), connected through one of their inputs to the output of the differentiating amplifier (8, 14) wherein one of the voltage comparators (COFF) (9, 15) generates a pulse when the output voltage of the differentiating amplifier (8, 14) is greater than a first threshold (V+) and another of the voltage comparators (CON) (9, 15) generates a pulse when the output voltage of the differentiating amplifier (8, 14) is less than a second threshold (V-).

2. The pixel according to claim 1, wherein the anodes of the one or more photodiodes (6, 10) are connected, via the first breaker, to the source follower (7, 13) and, via a second breaker, to an energy storage element (12).

3. The pixel according to claim 2, wherein the energy storage element (12) is a capacitor.

4. The pixel according to any of claims 2 or 3, wherein the energy storage element (12) is an element external to the pixel, where other pixels of the DVS-type vision sensor are also connected.

5. The pixel according to any of the preceding claims, wherein the one or more photodiodes in photovoltaic mode are implemented in CMOS technology by means of at least one of the following PN junctions: Deep n-well/p-well (20) and p-well/n-diff (21).

6. A DVS (dynamic vision sensor) type vision sensor comprising:
- a pixel array (16), each pixel according to any of the preceding claims;
- a communication module (17), connected to the pixel array (16) and configured to communicate events generated by the pixels in the pixel array (16);
- an arbiter module (19) connected to the communication module (17), configured to receive, via the communication module (17), information about the one or more pixels that have generated events and to select one of them;
- at least one encoder (18), connected to the arbiter module (19), configured to encode the coordinates of the pixel selected by the arbiter module (19);
wherein a pixel generates an event when the output of one of its voltage comparators (9, 15) generates a pulse.

7. The sensor according to claim 6, wherein the communication module (17) uses an AER (Address Event Representation) communication protocol.
